Europäisches Patentamt

European Patent Office

Office européen des brevets

(11) Veröffentlichungsnummer: **0 561 110 A1**

## (12) EUROPÄISCHE PATENTANMELDUNG

(21) Anmeldenummer: **93100321.4**

(22) Anmeldetag: **12.01.93**

(51) Int. Cl.5: **C09K 3/10**, C08L 67/00

(30) Priorität: **19.03.92 DE 4208823**

(43) Veröffentlichungstag der Anmeldung:
**22.09.93 Patentblatt 93/38**

(84) Benannte Vertragsstaaten:
**AT BE CH DE DK ES FR GB GR IT LI LU NL PT SE**

(71) Anmelder: **HÜLS AKTIENGESELLSCHAFT**

**D-45764 Marl(DE)**

(72) Erfinder: **Brüning, Klaus, Dr.**
**Hauptstrasse 294**
**W-5060 Bergisch-Gladbach 2(DE)**
Erfinder: **Hahn, Siegfried**
**Königsberger Weg 14**
**W-5202 Hennef-Stossdorf(DE)**
Erfinder: **Vollkommer, Norbert, Dr.**
**Schumannstrasse 5**
**W-5210 Troisdorf(DE)**

(54) **Recycelbare Schutz- und Dichtungsmasse auf Basis eines Compounds aus hochmolekularen, teilkristallinen Copolyestern.**

(57) Es werden als Schmelze applizierbare Dichtungsmassen für Verschlüsse aus Copolyestern mit Gehalten von Füllstoffen vorgeschlagen, worin die Copolyester eine auf die Applikation eingestellte Schmelztemperatur und Schmelzviskosität sowie eine vergleichsweise niedrige Glastemperatur im Bereich von -25°C bis +15°C und eine hohe Molmasse aufweisen. Durch Teilkristallinität werden eine Reihe von Anforderungen erfüllt, insbesondere im Hinblick auf die für die Dichtigkeit erforderliche Kompressibilität, Härte, Elastizität und Haftung. Durch eine abgestimmte Erweichungstemperatur ist Sterilisationsfestigkeit gegeben. Die Polyester enthalten als Komponenten Terephthalsäure, mindestens eine Cosäure, besonders aliphatische Dicarbonsäuren sowie mindestens ein Diol sowie gegebenenfalls weitere Komponenten mit physiologischer Unbedenklichkiet für Lebensmittelverpackungen.

EP 0 561 110 A1

Die Erfindung betrifft in einem Arbeitsgang als Schmelze applizierbare Copolyester oder Copolyester enthaltende Compounds zur Verwendung als Dichtungsmaterialien bzw. Schmelzmassen, insbesondere für Schraubdeckel-Verschlüsse (Twist-off) oder für Kronkorken, besonders für Verpackungen von Lebensmitteln.

Copolyester als Basis für Dichtungsmaterialien sind bereits bekannt (DE 34 02 280 C1; EP 0 222 165 A2), werden aber z.B. als Abdichung von Metallbehältern bzw. in der Automobilindustrie zur Abdichtung von Bördelnähten eingesetzt.

Soweit dort vernetzte Systeme z.B. unter Verwendung von Isocyanaten oder Epoxide verwendet sind, ist keine Eignung in Kontakt mit Lebensmitteln gegeben. Auch sind Copolyester als Folie entweder nicht sterilisierbar, von ungenügender Elastizität oder erfordern zu hohen Aufwand bei Einbringung in Verschlüsse.

Derzeit werden als Dichtungsmaterialien für Schraubdeckel-Verschlüsse oder Kronkorken vornehmlich PVC-Plastisole eingesetzt. Diese werden in die Innenseite der Gefäßverschlüsse eingespritzt und müssen danach aufwendig durch einen Ofendurchlauf thermisch geliert werden. Obwohl dieses Verfahren technisch ausgereift ist und die Qualität der Dichtungen den gestellten Anforderungen entspricht, werden vom Markt in zunehmendem Umfang alternative Systeme gefordert. PVC-Dichtungsmassen lassen sich nicht nur nicht wiederverwenden, sondern sie sind auch durch Verbrennung nur schwierig zu entsorgen.

Daher bestand die Aufgabe darin, Dichtungsmaterialien, besonders für Schraubdeckel oder Kronenkorken zu entwickeln, die den nachfolgend genannten technischen Anforderungen genügen und wiederverwendet werden können d.h. recycelbar sind, den hygienischen Bestimmungen für Lebensmittel entsprechen und für den Fall der Entsorgung durch Verbrennung nur aus den Elementen Kohlenstoff, Wasserstoff und Sauerstoff bestehen.

Außerdem wäre es von Vorteil, wenn die Einbringung in den Verschluß in nur einem technischen Arbeitsgang erfolgt, d.h. auf den Verfahrensschritt der thermischen Nachbehandlung zur Gelierung wie bei PVC-Plastisolen, verzichtet werden könnte.

Die Dichtmasse muß insbesondere im Hinblick auf das Applikationsverhalten, die Elastizität, das Rückprallverhalten, die Gleitfähigkeit, die Haftungseigenschaften, Gasdichtigkeit sowie die Pasteurisierungs- bzw. Sterilisationsfestigkeit, hohe Anforderungen erfüllen.

Dieses Anforderungsprofil wird durch Dichtungsmassen auf der Grundlage der erfindungsgemäßen Copolyester erfüllt. Durch Verwendung von Bestandteilen des Copolyesters und Katalysatorsystemen, die für Lebensmittelverpackungen zugelassen sind, wird physiologische Unbedenklichkeit der Dichtungsmasse erreicht. Die chemische Struktur der Copolyester garantiert ihre Umwelt- und Entsorgungsfreundlichkeit. Die Aufgabe, die Applizierbarkeit der Copolyester-Dichtungsmassen den maschinellen Gegebenheiten anzupassen, konnte dadurch gelöst werden, daß Schmelztemperatur und Schmelzviskosität so eingestellt werden, daß die Masse unter Druck über eine Düse in die Dosendeckel oder Kronkorken eingespritzt werden kann. Die Erweichungstemperatur (Fließpunkt nach DIN 52022) der Copolyester und ihre Schmelztemperatur nach WSC) ist so abgestimmt, daß gleichzeitig eine Pasteurisierung bzw. Sterilisierung erreicht wird.

Es hat sich gezeigt, daß die erfindungsgemäßen teilkristallinen Copolyester die ideale Ausgewogenheit im Eigenschaftsbild zwischen den Kenngrößen Härte, Elastizität, Kompressibilität, Rückprallvermögen und Gleitfähigkeit besitzen, welche für eine einwandfreie Dichtigkeit des Schraubdeckel-Verschlusses maßgeblich sind, um einerseits ein Durchschneiden der Dichtungsmasse beim Zudrehen des Deckels zu vermeiden, und andererseits die vorgegebenen Schließ- und Öffnungs-Kräfte einzuhalten.

Erfindungsgemäß ergibt die chemische Zusammensetzung teilkristalline Copolyester mit relativ niedriger Glasübergangstemperaturen Tg im Bereich von -25 bis + 15 °C in Korrelation mit vergleichsweise hohen Schmelz- bzw. Erweichungstemperaturen, wodurch die erfindungsgemäßen Copolyester ausgezeichnete Haftungseigenschaften, sowohl auf lackierten Blechen als auch auf Aluminium oder Aluminium-Legierungen aufweisen. Zugleich wird eine leichte Kompressibilität und ein elastisches Deformationsverhalten erreicht, um eine einwandfreie Dichtigkeit der Verschlüsse zu gewährleisten, als auch eine ausreichend Härte und eine gute Wärmebeständigkeit, um auch den Bedingungen des Pasteurisierens (60 ° bis 80 °C) und bei darauf gezielt abgestimmter Zusammensetzung der Copolyester (Flp. > 150 °C), auch des Sterilisierens (15 min/123 °C) ohne Dichtigkeitsverlust und ohne Durchschneideeffekt der Dichtungsmasse zu widerstehen.

Die Schmelzviskosität der erfindungsgemäßen Copolyester steht in Relation zu ihrer Molmasse und wird bei der Polykondensation eingestellt, vornehmlich im Hinblick auf die späteren Applikationsbedingungen.

Aufgrund ihrer Molmasse $M_w$(nach GPC) von > 10.000 g/Mol gehören die Copolyester zu den hochmolekularen Vertretern ihrer Stoffklasse.

Die erfindungsgemäßen teilkristallinen Copolyester sind dadurch gekennzeichnet, daß

a) die Erweichungstemperatur (Fließpunkt nach DIN 52011 bzw. Ring + Ball nach ASTM D 36) im Bereich 120 bis 190°C, vorzugsweise 140 bis 180°C liegen soll;

b) die Schmelztemperatur, gemessen nach der DSC-Methode (als Maximum des Schmelzpeaks) im Bereich 100 bis 185°C, vorzugsweise 120 bis 175°C liegen soll;

c) die Glasübergangstemperatur Tg, gemessen nach der DSC-Methode (zweite Aufheizung als Wendepunkt der Temperatur-Stufe) im Bereich -25 bis +15°C, vorzugsweise -20 bis +10°C, liegen soll;

d) die Schmelzviskosität, gemessen mit einem Rotations-Viskosimeter vom Kegel/Platte-Typ, bei 200°C im Bereich 10 bis 100 Pa.s, vorzugsweise 20 bis 70 Pa.s, liegen soll;

e) die Viskositätszahl (VIZ), gemessen nach DIN 53 728 (bei einer Konzentration 0,005 g/cm$^3$ in Phenol/o-Dichlorbenzol-Gemisch = 50/50 bei 25°C) im Bereich 50 bis 100 cm$^3$/g, vorzugsweise 60 bis 90 cm$^3$/g, liegen soll;

f) die Shore-D-Härte nach DIN 53 505 im Bereich 20 bis 45, vorzugsweise 22 bis 40, liegen soll.

Die Copolyester können durch Polykondensation der nachstehenden Komponenten hergestellt werden:

A. Terephthalsäure oder ein esterbildendes Derivat der Terephthalsäure

B. mindestens einer der Dicarbonsäuren der allgemeinen Formel I

HOOC - R - COOH     (I) ,

worin R ein aliphatischer Rest mit 2 bis 10 C-Atomen, ein cycloaliphatischer Rest mit 4 bis 12 C-Atomen, ein aromatischer Rest mit 6 bis 12 C-Atomen oder der Rest einer dimerisierten Fettsäure mit 6 bis 44 C-Atomen sein kann bzw. der esterbildenden Derivate dieser Dicarbonsäuren

C. gegebenenfalls Trimesinsäure oder Trimellithsäureanhydrid

D. mindestens eines der Diole der allgemeinen Formel II

HO - R' - OH     (II) ,

worin R' ein aliphatischer Rest mit 2 bis 12 C-Atomen ist;

E. gegebenenfalls Diole der allgemeinen Formel III allein oder im Gemisch

HO - R'' - OH     (III) ,

worin R'' ein cycloaliphatischer Rest mit 4 bis 12 C-Atomen oder araliphatischer Rest mit 8 bis 12 C-Atomen oder der Rest -CH$_2$ - CH$_2$ - O - CH$_2$ - CH$_2$ sein kann;

F. gegebenenfalls Trimethylolethan oder Trimethylolpropan in einem solchen Mengenverhältnis, daß die Grundbausteine gemäß den nachstehenden Anteilen in den Copolyestern enthalten sind:

A = 40 bis 80 Mol-%, vorzugsweise 50 bis 75 Mol-%

B = 20 bis 60 Mol-%, vorzugsweise 25 bis 50 Mol-%

C = 0 bis 3 Mol-%, vorzugsweise 0 bis 2 Mol-%,

wobei die Summe der Säurekomponenten jeweils 100 Mol-% beträgt und

D = 60 bis 100 Mol-%, vorzugsweise 75 bis 100 Mol-%

E = 0 bis 40 Mol-%, vorzugsweise 0 bis 25 Mol-%

F = 0 bis 3 Mol-%, vorzugsweise 0 bis 2 Mol-%,

wobei die Summe der Alkoholkomponenten jeweils 100 Mol-% beträgt.

Bevorzugt sind Copolyester mit 40 bis 80 Mol-%, vorzugsweise 50 bis 75 Mol-% Terephthalsäure und 20 bis 60 Mol-%, vorzugsweise 25 bis 50 Mol-% der genannten aliphatischen Dicarbonsäuren mit aliphatischem Rest von 2 bis 10 C-Atomen, insbesondere 4 bis 10 C-Atomen. In diesen bevorzugten Copolyestern kann gegebenenfalls bis 50 Mol-% der aliphatischen Dicarbonsäuren durch Isophthalsäure ersetzt sein.

Copolyester sind als Bestandteil der Dichtungsmasse entschieden bevorzugt, jedoch sind auch Mischungen verschiedener Copolyester möglich, beispielsweise durch Vermischen von einem Copolyester mit hohem Anteil Isophthalsäure mit einem Copolyester mit Anteilen einer aliphatischen Dicarbonsäure bzw. Vermischen von Butandiol-Copolyestern mit solchen des Ethylenglykols oder durch Mischen eines Copolyesters mit z.B. niedrigem Tg mit einem von hohem Tg bzw. zweier Copolyester von verschiedenem Fließpunkt, wodurch gegebenenfalls erst in der Mischung die Korrelation der physikalischen Eigenschaften nach den Patentansprüchen erreicht wird.

Aus Gründen der physiologischen Unbedenklichkeit (FDA § 175.300) sind neben der Terephthalsäure die Adipinsäure, Sebazinsäure und die nicht-hydrierten Dimerfettsäuren stark bevorzugt bzw. deren Derivate.

Als Diole der Formel II kommen Ethylenglykol, Propandiol-1,3; Butandiol-1,4; Pentandiol-1,5; Hexandiol-1,6; Nonandiol-1,9 und Dodecandiol-1,12 in Frage. Davon sind Ethylenglykol und Butandiol-1,4 stark bevorzugt.

Unter den Diolen der Formel III sind Cyclohexandimethanol, m- oder p-Xylylenglykol bevorzugt und Diethylenglykol sehr bevorzugt.

Geringe Anteile trifunktioneller Kondensationskomponenten wie Trimellithsäureanhydrid oder Trimethylolpropan, im Bereich 0 bis 3 Mol-% sind möglich und modifizieren u.a. das rheologische Verhalten bei Applikation der Dichtungsmassen; vor allem jedoch erhöhen sie die Reaktivität bei der Polykondensation.

Die Copolykondensation erfolgt nach bekannten Verfahren, z.B. durch Umesterung und/oder Veresterung der Komponenten mit anschließender Polykondensation, vorzugsweise in der Schmelze unter Vakuum bis zur Erreichung der gewünschten Schmelzviskosität.

Der Einsatz der Copolyester als Dichtungsmassen erfolgt in der Regel nicht als reiner Copolyester, sondern vorzugsweise in Form von Compounds, die polymere Füllstoffe, anorganische Füllstoffe und Pigmente und Hilfsstoffe wie Gleitmittel, Blähmittel, Haftvermittler, Stabilisatoren, Keimbildner bzw. Kristallisationsbeschleuniger enthalten. Polymere Füllstoffe sind alle Polymere, die mit der Polyestermasse zwar mischbar, jedoch nicht oder nur begrenzt verträglich sind. dies sind beispielsweise amorphe Polyalphaolefine wie ataktisches Polypropylen oder binäre oder ternäre Copolymerisate, Copolymerisate aus Olefinen mit 2 bis 10 Kohlenstoffatomen, z.B. entsprechend DE-PS 2306667 oder DE-PS 2930108. Ebenfalls in Betracht kommen Copolymere aus Ethylen und Vinylacetat sowie thermoplastische Kautschuke vom Typ SBS, SIS oder SEBS, wie sie beispielsweise von SHELL unter den Handelsbezeichnungen Kraton[(R)] und Cariflex[(R)] vermarktet werden.

Diese Zusatzstoffe können bei der Copolyester-Herstellung den Copolyestern, vorzugsweise über den Schmelzzustand in Knetwerken, Walzenstühlen oder stark bevorzugt in Extrudern, zugemischt werden.

Füllstoffe sind in Anteilen von 2 bis 40 Gew.-%, vorzugsweise 2 bis 35 Gew.-%, bezogen auf die Dichtungsmasse, möglich. Additive wie Pigmente, Gleitmittel o.dgl. sind in Anteilen von 0 bis 10 Gew.-% der Dichtungsmasse möglich.

Bevorzugte anorganische Füllstoffe sind Bariumsulfat, Talkum, Kreide. Aluminiumsilikate. Bevorzuge Pigmente sind Magnesiumoxid, Zinkoxid und besonders Titandioxid. Bevorzugte Gleitmittel sind Montansäuren $C_{26}$ bis $C_{32}$ und deren Derivate (Montanwachse), Lanoline, Paraffine, Polyolefine und Fisher-Tropser-Wachse der Stearin- und Palmitinsäure, ungesättigte Carbonsäuren mit mehr als 18 C-Atomen wie beispielsweise Erucasäure ($C_{22}$).

In den folgenden Beispielen wird die Herstellung der erfindungsgemäßen Copolyester für die Dichtungsmassen gezeigt.

Die Abkürzungen bedeuten:

DMT = Dimethylterephthalat
IPS = Isophthalsäure
AD = Adipinsäure
SEB = Sebazinsäure
DFS = Dimerfettsäure (Pripol[(R)]1012 , Firma Unichema)
TMSA = Trimellilthsäureanhydrid
EG = Ethylenglykol
DEG = Diethylenglykol
BD = Butandiol-1,4
TMP = Trimethylolpropan

**Beispiel 1**

In einem Reaktionskessel aus V4A-Stahl von 10 l Inhalt mit Rührwerk mit Drehmomentanzeige, Einfüllstutzen für die Ausgangsstoffe, Zu- und Ableitungsrohr für Inertgas, aufgesetzter Kolonne mit Dephlegmator und Brüdenrohr, Temperaturanzeige für die Massetemperatur sowie Druckmessung, werden 3.657 kg (18,85 Mol) DMT und 2.337 kg (37.7 Mol) EG, zusammen mit 1,2 g Zinkacetat-Dihydrat, als Katalysator chargiert. Unter Inertgas (Stickstoff) wird unter Rühren aufgeheizt und bei Tempratur von 170° bis 210°C in 3 h umgesetzt. Nach Entfernung des Methanols werden 2.053 kg (10.15 Mol) SEB und 5.9 g Mikrotalkum als Keimbildner zugesetzt und bei Temperaturen von 190 bis 235°C in 3 h verestert. Nach Entfernung des Wassers werden 1.5 g amorphes Germaniumdioxid als Polykondensationskatalysator zugegeben und in 1 h unter Absenken als VAkuum auf 1 mbar auf 260°C aufgeheizt und bei dieser Temperatur polykondensiert. Der Ansath wird bei einer auf 70 Upm abnehmenden Rührgeschwindigkeit so lange gehalten, bis nach der Drehmomentanzeige die Schmelzviskosität erreicht ist, welche der angestrebten Molmasse des Copolyesters entspricht. Durch Einleiten von Stickstoff wird das Vakuum gebrochen und der Copolyester als Schmelze abgelassen, der nach Abkühlen durch Kristallistion opak wird. Er wird zerkleinert und zur eigentlichen Dichtungsmasse compoundiert.

Die Copolyester der Beispiele 2 bis 18 und der Vergleichsbeispiele werden mit den in der Tabelle genannten Komponenten in entsprechender Weise wie Beispiel 1 hergestellt.

Die Eigenschaften der Copolyester und dessen molare Zusammensetzung enthält die Tabelle.

**Tabelle**

| Beispiel | 1 | 2 | 3 | 4 | 5 | 6 | 7 | 8 | 9 | 10 | 11 | 12 | 13 | 14 | 15 | 16 | 17 | 18 | Vergl. 1 | Vergl. 2 | Vergl. 3 |
|---|---|---|---|---|---|---|---|---|---|---|---|---|---|---|---|---|---|---|---|---|---|
| DMT [Mol %] | 65 | 60 | 60 | 60 | 60 | 60 | 60 | 55 | 60 | 65 | 75 | 65 | 65 | 72 | 65 | 50 | 50 | 70 | 34 | 35 | 85 |
| IPS [Mol %] | - | - | - | - | - | - | - | - | - | - | - | - | - | - | 15 | - | - | - | 33 | - | 15 |
| AD [Mol %] | - | 15 | 10 | 20 | 9,5 | 9,5 | 9,5 | 20 | 12 | 10 | - | - | - | - | - | 20 | 10 | - | - | 15 | - |
| SEB [Mol %] | 35 | 25 | 30 | 20 | 30 | 30 | 30 | 25 | 28 | 25 | 25 | 35 | - | 28 | 20 | 30 | 40 | 30 | 33 | 50 | - |
| DFS [Mol %] | - | - | - | - | 0,5 | 0,5 | 0,5 | - | - | - | - | - | 35 | - | - | - | - | - | - | - | - |
| TMSA [Mol %] | - | - | - | - | - | - | - | - | - | - | - | - | - | - | - | - | - | - | - | - | - |
| EG [Mol %] | 100 | 100 | 100 | 100 | 100 | 100 | 100 | 100 | 100 | 90 | 80 | - | - | - | - | 99 | 99 | - | 100 | 100 | 100 |
| DEG [Mol %] | - | - | - | - | - | - | - | - | - | 10 | 20 | - | - | - | - | - | - | - | - | - | - |
| BD [Mol %] | - | - | - | - | - | - | - | - | - | - | - | 100 | 100 | 99 | 100 | - | - | 100 | - | - | - |
| TMP [Mol %] | - | - | - | - | - | - | - | - | - | - | - | - | - | 1 | - | 1 | 1 | - | - | - | - |
| Flp(R + K) n. DIN 52011 [°C] | 175° | 164° | 164° | 165° | 161° | 159° | 157° | 150° | 165° | 159° | 161° | 168° | 163° | 176° | 169° | 138° | 136° | 179° | 100° | 113° | 200° |
| Fp (DSC) [°C] | 171° | 153° | 153° | 155° | 151° | 150° | 147° | 132° | 153° | 134°/148° | 146° | 156° | 144° | 158° | 155° | 122° | 119° | 161° | 61° | 64° | 200° |
| Tg (DSC) [°C] | -3° | -4° | -6° | -1° | -5° | -6° | -8° | -7° | -4° | 0° | 6° | -17° | -15° | -12° | -14° | -18° | -20° | -13° | -23° | -32° | 37° |
| Schmelzvisk (K/P) bei 200 °C [Pa.s] | 38 | 39 | 37 | 40 | 38 | 29 | 21 | 34 | 40 | 38 | 42 | 37 | 31 | 45 | 39 | 35 | 18 | 20 | 25 | 32 | > 110 |
| Viskositätszahl n. DIN 53728 [cm³/g] | 65 | 69 | 68 | 69 | 69 | 66 | 62 | 70 | 69 | 67 | 68 | 78 | 65 | 66 | 72 | 69 | 56 | 61 | 77 | 72 | 68 |
| Shore-D-Härte n. DIN 53505 | 34 | 35 | 33 | 37 | 34 | 33 | 32 | 25 | 31 | 32 | 35 | 39 | 28 | 30 | 36 | 26 | 22 | 41 | 17 | 12 | 79 |
| | | | | | | | | | | | | | | | | | | | zu weich | zu weich | zu hart |

**Patentansprüche**

1. Als Schmelze applizierbare, recycelbare Schutz- und Dichtungsmasse, bestehend aus 60 bis 98 Gew.-% eines Copolyesters oder Polyestergemisches

2 bis 40 Gew.-% Füllstoff bzw. polymere Füllstoffe
0 bis 10 Gew.-% Additive.

2. Dichtungsmasse nach Anspruch 1, dadurch gekennzeichnet, daß der Copolyester bzw. die Polyestermischung eine Erweichungstemperatur (Fließpunkt nach DIN 52011 bzw. Ring und Ball nach ASTM D 36) im Bereich 120 bis 190°C, vorzugsweise 140 bis 180°C, eine Viskositätszahl, gemessen nach DIN 53728 (bei einer Konzentration 0,005 g/cm³ in Phenol/Ortho-dichlorbenzolgemisch = 50 : 50 bei 25°C) von 50 bis 100 cm³/g, vorzugsweise 60 bis 90 cm³/g, eine Schmelzviskosität, gemessen mit einem Rotations-Viskosimeter vom Kegel/Platte-Typ, bei 200° C im Bereich von 10 bis 100 Pa.s, vorzugsweise 20 bis 70 Pa.s, und eine Shore-D-Härte nach DIN 53505 im Bereich von 20 bis 45, vorzugsweise 22 bis 40, besitzen soll.

3. Dichtungsmasse nach mindestens einem der Ansprüche 1 oder 2, dadurch gekennzeichnet, daß die hochmolekularen, teilkristallinen Copolyester hergestellt sind durch Polykondensation der Monomeren
   A) Terephthalsäure oder ein esterbildendes Derivat der Terephthalsäure
   B) mindestens einer der Dicarbonsäuren der allgemeinen Formel I

   HOOC—R—COOH      (I) ,

   in welcher R ein aliphatischer Rest mit 2 bis 10 C-Atomen, ein cycloaliphathischer Rest mit 4 bis 12 C-Atomen, ein aromatischer Rest mit 6 bis 12 C-Atomen oder der Rest einer dimerisierten Fettsäure mit 16 bis 44 C-Atomen oder der esterbildenden Derivate dieser Dicarbonsäuren ist,
   C) ggf. Trimesinsäure oder Trimellithsäureanhydrid
   D) mindestens eines der Diole der allgemeinen Formel II

   HO—R'—OH      (II) ,

   in welcher R' ein aliphatischer Rest mit 2 bis 12 C-Atomen sein kann,
   E) ggf. Diole der allgemeinen Formel III allein oder im Gemisch

   HO—R''—OH      (III) ,

   in welcher R'' ein cycloaliphatischer Rest mit 4 bis 12 C-Atomen oder ein araliphatischer Rest mit 8 bis 12 C-Atomen oder der Rest
   $CH_2 — CH_2 — O — CH_2 — CH_2$ sein kann,
   F) ggf. Trimethylolethan oder Trimethylolpropan, dadurch gekennzeichnet, daß die Grundbausteine dieser Komponenten gemäß den nachstehenden Anteilen in den Copolyestern enthalten sind:
   A = 40 bis 80 Mol-%, vorzugsweise 50 bis 75 Mol-%,
   B = 20 bis 60 Mol-%, vorzugsweise 25 bis 50 Mol-%,
   C = 0 bis 3 Mol-%, vorzugsweise 0 bis 2 Mol-%,
   wobei die Summe der Säurekomponenten jeweils 100 Mol-% betragen soll und
   D = 60 bis 100 Mol-%, vorzugsweise 75 bis 100 Mol-%,
   E = 0 bis 40 Mol-%, vorzugsweise 0 bis 25 Mol-%,
   F = 0 bis 3 Mol-%, vorzugsweise 0 bis 2 Mol-%,
   wobei die Summe der Alkoholkomponenten jeweils 100 Mol-% betragen soll, enthalten sind.

4. Dichtungsmasse nach einem der Ansprüche 1 bis 3, dadurch gekennzeichnet, daß der Copolyester oder die Copolyestermischung 40 bis 80, vorzugsweise 50 bis 75 Mol-% Terephthalsäure und 20 bis 60, vorzugsweise 25 bis 50 Mol-% einer aliphatischen Dicarbonsäure mit aliphatischem Rest von 2 bis 10 C-Atomen, worin bis zu 50 Mol-% der aliphatischen Dicarbonsäure durch Isophthalsäure ersetzt sein kann, enthält.

5. Dichtungsmasse nach einem der Ansprüche 1 bis 4 für die Verwendung als spritzfähige, sterilisierbare, druck- und vakuumfeste Dichtungsmasse für Verschlüsse oder verschließbare Behälter.

Europäisches
Patentamt

**EUROPÄISCHER RECHERCHENBERICHT**

Nummer der Anmeldung

EP    93 10 0321

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| X | FR-A-2 436 797 (ASAHI KASEI KOGYO KABUSHIKI KAISHA) * das ganze Dokument * --- | 1,3,5 | C09K3/10 C08L67/00 |
| X | DATABASE WPIL Week 8632, Derwent Publications Ltd., London, GB; AN 86-209604 & JP-A-61 143 484 (TOYODA GOSEI) 1. Juli 1986 * Zusammenfassung * --- | 1,3 | |
| P,X | EP-A-0 507 244 (TOYO BOSEKI KABUSHIKI KAISHA) * Seite 1, Zeile 3 - Zeile 7 * * Seite 5, Zeile 26 - Zeile 33 * * Beispiele * --- | 1,3 | |
| A | DATABASE WPI Week 7552, Derwent Publications Ltd., London, GB; AN 75-85462W & JP-A-50 082 162 (TOYOBO KK) * Zusammenfassung * --- | 1 | RECHERCHIERTE SACHGEBIETE (Int. Cl.5) |
| A | US-A-4 112 020 (J. E. CALLAN) * Spalte 2, Zeile 43 - Zeile 59 * * Anspruch 1; Beispiele 1,3 * ----- | 1,3 | C09K |

Der vorliegende Recherchenbericht wurde für alle Patentansprüche erstellt

| Recherchenort | Abschlußdatum der Recherche | Prüfer |
|---|---|---|
| DEN HAAG | 25 JUNI 1993 | PUETZ C. |